(19)

Europäisches
Patentamt

European
Patent Office

Office européen
des brevets

(11) **EP 4 530 144 A1**

(12) **EUROPEAN PATENT APPLICATION**
published in accordance with Art. 153(4) EPC

(43) Date of publication:
02.04.2025 Bulletin 2025/14

(21) Application number: 23938311.0

(22) Date of filing: 26.12.2023

(51) International Patent Classification (IPC):
**B60W 60/00** (2020.01)   **B60W 30/095** (2012.01)
**B60W 40/04** (2006.01)

(52) Cooperative Patent Classification (CPC):
**G01S 17/86; G01S 17/89; G01S 17/931;**
G08G 1/16; Y02T 10/40

(86) International application number:
**PCT/CN2023/141752**

(87) International publication number:
**WO 2024/239646 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.05.2023  CN 202310574584

(71) Applicant: **Huizhou Desay SV Automotive Co.,
Ltd.**
**Huizhou, Guangdong 516000 (CN)**

(72) Inventors:
• **LU, Wei**
  **West Huizhou, Guangdong 516000 (CN)**
• **WANG, Dexiang**
  **West Huizhou, Guangdong 516000 (CN)**
• **CHEN, Qingye**
  **West Huizhou, Guangdong 516000 (CN)**

(74) Representative: **karo IP**
**Patentanwälte PartG mbB**
**Steinstraße 16-18**
**40212 Düsseldorf (DE)**

(54) **VEHICLE COLLISION DETECTION METHOD AND SYSTEM, AND VEHICLE**

(57)    A vehicle collision detection method and system, and a vehicle. The vehicle collision detection method comprises: dividing an acquired set of information of obstacles into a first obstacle map and a second obstacle map according to a preset obstacle height; then modeling the current vehicle on the basis of the first obstacle map and the second obstacle map, and fusing a modeling result with the first obstacle map and the second obstacle map, so as to obtain a first collision detection model and a second collision detection model; and then by means of the first collision detection model and/or the second collision detection model, further obtaining a distance relationship between a preset position of the current vehicle and an obstacle corresponding to the set of information of obstacles, and determining, according to the distance relationship, whether the current vehicle is involved in a collision. By means of the vehicle collision detection method, accurate collision risk analysis can be performed in real time for different obstacle height types, such that the accuracy and efficiency of collision detection are improved, and the driving safety of a vehicle and personal safety of people in the vehicle are further guaranteed.

Fig. 1

**Description**

TECHNICAL FIELD

The present application relates to the technical field of intelligent driving, in particular to a vehicle collision detection method and system, and a vehicle.

BACKGROUND

With the rapid development of intelligent driving, the automatic driving function of automobiles is becoming more and more popular. While the automatic driving function brings convenience to people, there are also some issues with poor experience, such as scratching rear-view mirrors, hitting the curb or having a collision accident, leading some users to dare not use the automatic driving function, which is not conducive to the development of intelligent driving.

In the prior art, the distance between a current vehicle and an obstacle can be acquired based on sensor data, and then collision detection analysis and warning are carried out. However, data transmitted by sensors has inaccuracies and delays, so that collision detection fails to be carried out in time. Moreover, sensors cannot conduct corresponding collision detection for different vehicles according to the height of an obstacle, resulting in the collision between the current vehicle and the obstacle in the driving process, which may cause casualties in serious cases.

SUMMARY OF THE INVENTION

In order to solve the technical problems that in the prior art, collision detection cannot be carried out in time due to the inaccuracy and delay of data transmitted by sensors, and the sensors cannot carry out corresponding collision detection for different vehicles according to the height of obstacles, resulting in the collision between a current vehicle and the obstacles during the driving process, the present application provides a method and system capable of carrying out vehicle collision detection based on height of obstacles.

Specifically, the present application provides a vehicle collision detection method. The method includes the following steps:

S100: acquiring a collection of obstacle information within a preset range of a current vehicle, and dividing the collection of obstacle information into a first obstacle map and a second obstacle map based on a preset obstacle height.

S200: modeling the current vehicle based on the first obstacle map and the second obstacle map, and fusing vehicle models with the corresponding obstacle maps to obtain a first collision detection model and a second collision detection model, respectively.

S300: obtaining a distance relationship between a preset position of the current vehicle and obstacles corresponding to the collection of obstacle information through the first collision detection model and/or the second collision detection model, and determining whether the current vehicle is in collision based on the distance relationship.

In the above technical solution, the obstacle maps are divided according to the height of an obstacle, then the corresponding collision detection models are built, and the distance relationship between the current vehicle and the obstacle is determined through the collision detection models to obtain the collision risk. The collision risk may be analyzed accurately in real time for different types of obstacle heights, the accuracy and efficiency of collision detection are improved, and the driving safety of the vehicle and the personal safety of occupants are further guaranteed.

Further, the dividing the collection of obstacle information into a first obstacle map and a second obstacle map based on a preset obstacle height in step S100 includes:

Calibrating maximum lengths of front wheels and rear wheels of the current vehicle, respectively, and setting the preset obstacle height according to calibration results.

Determining whether heights of the obstacles corresponding to the collection of obstacle information are greater than the preset obstacle height, if yes, classifying the obstacles into the first obstacle map, otherwise classifying the obstacles into the second obstacle map.

In the above technical solution, by calibrating the preset obstacle height according to the lengths of the front and rear wheels of the vehicle, and classifying obstacles with different obstacle heights into the different maps, analysis of collision detection is more targeted, which further improves the accuracy and efficiency of collision detection.

Further, step S200 includes:
Modeling the current vehicle to obtain a first vehicle model including a front overhang and a rear overhang of the vehicle, and a second vehicle model with the front overhang and the rear overhang of the vehicle removed.

Fusing the first vehicle model and the second vehicle model with the first obstacle map and the second obstacle map, respectively, to obtain the first collision detection model and the second collision detection model.

The vehicle models are obtained and fused into the corresponding obstacle maps to obtain the corresponding collision detection models for use in subsequent analysis of collision detection.

In the above technical solution, the maximum lengths of the front and rear wheels of the current vehicle are calibrated, so that models corresponding to various vehicles and the collision detection models correspond and are unique, making the collision detection more personalized and intelligent.

Further, before performing step S300, the method includes:

Building a first rectangular coordinate system with a geometric center of the current vehicle as a first origin, a width direction of the current as an x-axis, and a length direction of the vehicle as a y-axis; and building a second rectangular coordinate system with a midpoint of a rear axle of the current vehicle as a second origin, the width direction of the vehicle as an X-axis, and the length direction of the vehicle as a Y-axis.

In the above technical solution, by building the first rectangular coordinate system and the second rectangular coordinate system, not only may datamation of the positions of the obstacles be determined, subsequent determination of the first preset circular region and the second preset circular region is also facilitated.

Further, step S300 includes:

S301: acquiring, in the first collision detection model, initial obstacle coordinates of the obstacles under the first rectangular coordinate system.

S302: calculating a distance between each obstacle and the first origin based on the initial obstacle coordinates and coordinates of the first origin.

If the distance between at least one of the obstacles and the first origin is smaller than a first preset distance, performing step S303, otherwise performing step S305.

In the above technical solution, obstacles with collision risk are first screened out to narrow down the range before proceeding to the next step of collision risk detection.

S303: Acquiring transformed obstacle coordinates of obstacles in a first preset circular region under the second rectangular coordinate system, and proceeding to step S304.

In the above technical solution, the transformed obstacle coordinates under the second rectangular coordinate system are used here to reduce the influence of the vehicle heading angle on the obstacle coordinates, so that obtained results of the distance between the obstacle and the current vehicle are more accurate, and the accuracy of collision detection is further improved.

S304: Calculating a distance between each obstacle in the first preset circular region and the second origin based on the transformed obstacle coordinates and coordinates of the second origin.

If the distance between at least one of the obstacles in the first preset circular region and the second origin is smaller than a second preset distance, determining that the current vehicle is in collision, otherwise performing step S305.

It is to be noted that the second preset distance is typically preferably half the width of the vehicle, or the length of the rear overhang of the vehicle, or the distance between the rear axle and the front overhang of the vehicle; herein, obstacles that may collide with the vehicle are further limited, so as to determine whether the current vehicle has a risk of collision.

S305: Determining that the current vehicle has no risk of collision.

The first preset circle region takes the first origin as a center of the circle and the first preset distance as a radius.

Further, step S300 further includes:

S311: acquiring, in the second collision detection model, initial obstacle coordinates of the obstacles under the first rectangular coordinate system.

S312: calculating a distance between each obstacle and the first origin based on the initial obstacle coordinates and coordinates of the first origin.

If the distance between at least one of the obstacles and the first origin is smaller than a third preset distance, performing step S313, otherwise performing step S315.

S313: acquiring transformed obstacle coordinates of obstacles in a second preset circular region under the second rectangular coordinate system, and proceeding to step S314.

S314: calculating a distance between each obstacle in the second preset circular region and the second origin based on the transformed obstacle coordinates and coordinates of the second origin.

If the distance between at least one of the obstacles in the second preset circular region and the second origin is smaller than a second preset distance, determining that the current vehicle is in collision, otherwise performing step S315.

S315: determining that the current vehicle has no risk of collision.

The second preset circle region takes the first origin as a center of the circle and the third preset distance as a radius.

Further, step S303 or S313 specifically includes:

Acquiring a vehicle heading angle, corresponding initial obstacle coordinates of the obstacles in the first preset circular region or the second preset circular region under the first rectangular coordinate system, and coordinates of the midpoint of the rear axle of the vehicle under the first rectangular coordinate system.

Calculating a first included angle based on the initial obstacle coordinates and the coordinates of the midpoint of the rear axle of the vehicle, and calculating a distance between each obstacle and the midpoint of the rear axle of the vehicle, wherein the first included angle is an included angle between a connecting line of each obstacle and the midpoint of the rear axle of the vehicle and a perpendicular line segment from the obstacle to the X-axis of the second rectangular coordinate system.

Calculating a second included angle based on the first included angle and the vehicle heading angle.

Calculating the transformed obstacle coordinates of each obstacle based on the distance between the obstacle and the midpoint of the rear axle of the vehicle and the second included angle.

In the above technical solution, the transformed obstacle coordinates remove the influence of the vehicle heading angle thereon, which further helps to improve the accuracy of subsequent collision detection.

Further, when it is determined that the current vehicle is in collision, step S304 or S314 further includes: issuing a collision warning message.

In the above technical solution, by issuing the collision warning message, a driver may be reminded to take emergency measures in time to reduce the possibility of an accident, thereby improving driving safety and guaranteeing the safety of the vehicle and the driver and passengers.

Based on the same concept, the present application further provides a vehicle collision detection system. The system includes:

A first acquisition module: configured to acquire a collection of obstacle information within a preset range of a current vehicle.

A dividing module: configured to divide the collection of obstacle information into a first obstacle map and a second obstacle map based on a preset obstacle height.

A second acquisition module: configured to model the current vehicle configured based on the first obstacle map and the second obstacle map, and fuse vehicle models with the corresponding obstacle maps to obtain a first collision detection model and a second collision detection model, respectively.

A determining module: configured to obtain a distance relationship between a preset position of the current vehicle and obstacles corresponding to the collection of obstacle information through the first collision detection model and/or the second collision detection model, and determine whether the current vehicle is in collision based on the distance relationship.

Further, the system further includes:
A building module: configured to build a first rectangular coordinate system and a second rectangular coordinate system, wherein the first rectangular coordinate system takes a geometric center of the current vehicle as a first origin, a width direction of the current as an x-axis, and a length direction of the vehicle as a y-axis; and the second rectangular coordinate system takes a midpoint of a rear axle of the current vehicle as a second origin, the width direction of the vehicle as an X-axis, and the length direction of the vehicle as a Y-axis.

A warning module: configured to issue a collision warning message when it is determined that the current vehicle is in collision.

Further, the dividing module includes:

A calibration unit: configured to calibrate maximum lengths of front wheels and rear wheels of the current vehicle.

A setting unit: configured to set the preset obstacle height according to calibration results of the calibration unit.

A dividing unit: configured to determine whether heights of the obstacles corresponding to the collection of obstacle information are greater than the preset obstacle height; if yes, classify the obstacles into the first obstacle map; otherwise, classify the obstacles into the second obstacle map.

Further, the second acquisition module includes:

A modeling unit: configured to obtain a first vehicle model and a second vehicle model.

A fusion unit: configured to fuse the first vehicle model and the second vehicle model with the first obstacle map and the second obstacle map, respectively, to obtain the first collision detection model and the second collision detection model.

Further, the determining module includes:
An acquisition unit: configured to acquire, in the first collision detection model or the second collision detection model, initial obstacle coordinates of the obstacles under the first rectangular coordinate system.

A first calculation unit: configured to calculate a distance between each obstacle and the first origin based on the initial obstacle coordinates and coordinates of the first origin to obtain transformed obstacle coordinates of obstacles in a second preset circular region under the second rectangular coordinate system when the distance is smaller than a first preset distance or a third preset distance.

A second calculation unit: configured to calculate a distance between each obstacle in the second preset circular region to the second origin based on the transformed obstacle coordinates and coordinates of the second origin, so as to determine that the current vehicle is in collision when the distance is smaller than a second preset distance.

By means of the system, the collision risk may be analyzed accurately for different types of obstacle heights, the accuracy of collision detection is improved, and the driving safety of the vehicle and the personal safety of occupants are further guaranteed.

Based on the same concept, the present application further provides a vehicle. The vehicle is configured with a vehicle collision detection system, and the system detects whether a current vehicle is in collision using the vehicle collision detection method described above.

Compared with the prior art, the present application has the following beneficial effects:

According to the present application, the collection of obstacle information is divided into the first obstacle map and the second obstacle map, then the first collision detection model and the second collision detection model are correspondingly built, and the distance relationship between the current vehicle and the obstacle is determined through the first collision detection model or the second collision detection model, so as to obtain the collision risk between the current vehicle and the obstacle. By means of the present application, the collision risk can be analyzed accurately for different types of obstacle heights, the accuracy of collision detection is improved, and the driving safety of the vehicle and the personal safety of occupants are further guaranteed.

BRIEF DESCRIPTION OF THE DRAWINGS

Figure 1 is a flowchart of a vehicle collision detection method according to the present application.

Figure 2 is a flowchart of a method for performing collision detection using a first collision detection model in figure 1.

Figure 3 is a flowchart of a method for performing collision detection using a second collision detection model in figure 1.

Figure 4 is a system framework diagram of a vehicle collision detection method in figure 1.

DETAILED DESCRIPTION OF THE INVENTION

The present application provides a vehicle collision detection method and system and a vehicle, in order to solve the technical problems that in the prior art, collision detection is inaccurate and inefficient due to the use of sensors for the detection of the distance between a vehicle and an obstacle, and corresponding collision detection cannot be carried out for different vehicles according to the height of the obstacle.

The present application provides a vehicle collision detection method and system and a vehicle. The overall solution is as follows:

Acquiring a collection of obstacle information within a preset range of a current vehicle, determining whether heights of obstacles corresponding to the collection of obstacle information are greater than a preset obstacle height, if yes, classifying the obstacles into a first obstacle map, otherwise classifying the obstacles into a second obstacle map; then modeling the current vehicle based on the first obstacle map and the second obstacle map, and performing fusion to obtain a first collision detection model and a second collision detection model; obtaining a distance relationship between a geometric center of the current vehicle and the obstacles corresponding to the collection of obstacle information through the first collision detection model and/or the second collision detection model; if the distance between at least one of the obstacles and the geometric center is smaller than a first set distance, obtaining a distance relationship between a midpoint of a rear axle of the current vehicle and the obstacles; and if the distance between at least one of the obstacles and the midpoint of the rear axle of the current vehicle is smaller than a second preset distance, determining that the current vehicle is in collision.

The vehicle collision detection method and system and the vehicle of the present application are described in further detail below in connection with specific embodiments and the accompanying drawings.

First Embodiment:

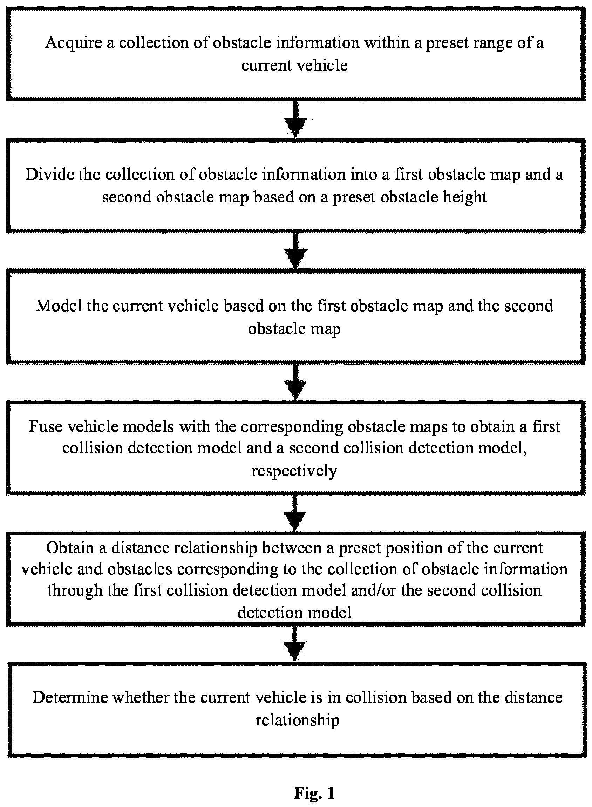

Referring to figure 1, the present application provides a vehicle collision detection method. The method includes the following steps:
S 100: Acquiring a collection of obstacle information within a preset range of a current vehicle, and divide the collection of obstacle information into a first obstacle map and a second obstacle map based on a preset obstacle height.

Further, the dividing the collection of obstacle information into a first obstacle map and a second obstacle map based on a preset obstacle height in step S100 includes:

Calibrating maximum lengths of front wheels and rear wheels of the current vehicle, and setting the preset obstacle height according to calibration results.

Determining whether heights of the obstacles corresponding to the collection of obstacle information are greater than the preset obstacle height, if yes, classifying the obstacles into the first obstacle map, otherwise classifying the obstacles into the second obstacle map.

Because chassis heights and vehicle heights vary from vehicle to vehicle, the preset obstacle height is calibrated according to an actual vehicle, and the specific value of the preset obstacle height is not limited herein.

It is to be noted that it may be considered that the first obstacle map is a body non-encroachable map and the second obstacle map is a body encroachable map, where body encroachable means that front and rear overhangs of the vehicle are encroachable due to a limiter or a low curb or the like.

After the division of the first obstacle map and the second obstacle map is completed, step S200 may be performed.

S200: Modeling the current vehicle based on the first obstacle map and the second obstacle map, and fuse vehicle models with the corresponding obstacle maps to obtain a first collision detection model and a second collision detection model, respectively.

Further, step S200 includes:
Modeling the current vehicle to obtain a first vehicle model including a front overhang and a rear overhang of the vehicle, and a second vehicle model with the front overhang and the rear overhang of the vehicle removed.

It is to be noted that the vehicle models are not 3d models, but twodimensional planar models of the surrounding contour of a vehicle. The first vehicle model is the surrounding contour of the entire vehicle including the front and rear overhangs of the vehicle, presenting a rounded rectangle, and the front and rear wheels of the vehicle are correspondingly identified by four rectangles, respectively. The second vehicle model is a rectangular contour map with the front and rear overhangs of the vehicle removed, and the corners of the contour map are where the wheels are located.

The first vehicle model and the second vehicle model are fused with the first obstacle map and the second obstacle map, respectively, to obtain the first collision detection model and the second collision detection model.

The first collision detection model or the second collision detection model may embody a position of an obstacle of the collection of obstacle information relative to a corresponding vehicle model, where an obstacle is presented in the form of a data point.

After completing the acquisition of the first collision detection model and the second collision detection model, step S300 may be performed.

S300: Obtaining a distance relationship between a preset position of the current vehicle and obstacles corresponding to the collection of obstacle information through the first collision detection model and/or the second collision detection model, and determine whether the current vehicle is in collision based on the distance relationship.

Before performing step S300, the method includes:

Building a first rectangular coordinate system with a geometric center of the current vehicle as a first origin, a width direction of the current as an x-axis, and a length direction of the vehicle as a y-axis; and building a second rectangular coordinate system with a midpoint of a rear axle of the current vehicle as a second origin, the width direction of the vehicle as an X-axis, and the length direction of the vehicle as a Y-axis.

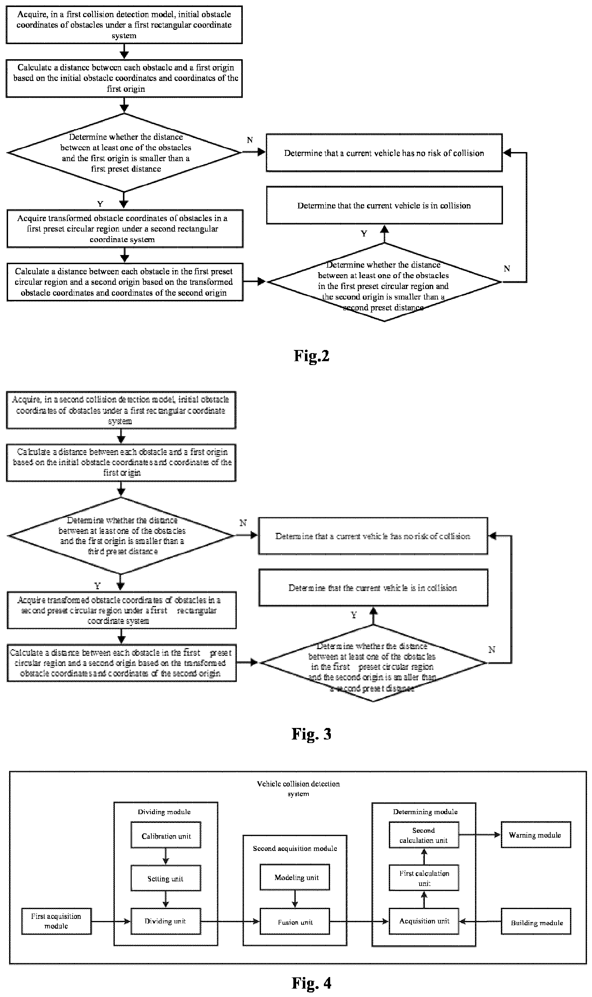

Further, referring to figure 2, step S300 includes:

S301: Acquiring, in the first collision detection model, initial obstacle coordinates $(x_i, y_i)$ of the obstacles under the first rectangular coordinate system.

S302: Calculating a distance L0i between each obstacle and the first origin based on the initial obstacle coordinates $(x_i, y_i)$ and coordinates $(x_0, y_0)$ of the first origin, where

$$L_{0i} = \sqrt{(x_i - x_0)^2 + (y_i - y_0)^2}$$

If the distance between at least one of the obstacles and the first origin is smaller than a first preset distance, step S303 is performed; otherwise step S305 is performed.

It is to be noted that the first preset distance is a distance between the geometric center of the current vehicle and any corner of the vehicle, because the geometric center of the vehicle is selected here, the distance between the geometric center and any corner of the vehicle is the same, and the distance may be arbitrarily selected in the practical application. For example, the distance between the geometric center of the current vehicle and the front right corner of the vehicle is measured and defined as the first preset distance.

When the vehicle collision detection method is applied in the automatic parking process, the positional relationship between the obstacle and the current vehicle is determined based on the distance between the geometric center of the vehicle and any corner of the vehicle, and obstacles with a certain collision risk in the automatic parking process, such as forwarding, reversing and turning, may be screened out.

S303: Acquiring transformed obstacle coordinates of obstacles in a first preset circular region under the second rectangular coordinate system.

Wherein the first preset circle region takes the first origin as a center of the circle and the first preset distance as a radius.

Further, step S303 specifically includes:
Acquiring a vehicle heading angle $\theta$, corresponding initial obstacle coordinates $(x_n, y_n)$ of the obstacles in the first preset circular region under the first rectangular coordinate system, and coordinates $(x, y)$ of the midpoint of the rear axle of the vehicle under the first rectangular coordinate system.

Calculating a first included angle $\theta 1$ based on the initial obstacle coordinates and the coordinates of the midpoint of the rear axle of the vehicle, and calculating a distance L between each obstacle and the midpoint of the rear axle of the vehicle.
where $\theta 1 = \arctan((x_n - x)/(y_n - y))$,

$$L = \sqrt{(x_n - x)^2 + (y_n - y)^2}$$

The first included angle $\theta 1$ is an included angle between a connecting line of each obstacle and the midpoint of the rear axle of the vehicle and a perpendicular line segment from the obstacle to the X-axis of the second rectangular coordinate system.

Calculating a second included angle $\theta 2$ based on the first included angle and the vehicle heading angle, where $\theta 2 = \theta 1 - \theta$.

Calculating the transformed obstacle coordinates $(x_m, y_m)$ of each obstacle based on the distance L between the obstacle and the midpoint of the rear axle of the vehicle and the second included angle $\theta 2$, where $x_m = L * \sin(\theta 2)$ and $y_m = L * \cos(\theta 2)$.

S304: Calculating a distance between each obstacle in the first preset circular region and the second origin based on the transformed obstacle coordinates and coordinates of the second origin.

If the distance between at least one of the obstacles in the first preset circular region and the second origin is smaller than a second preset distance, determining that the current vehicle is in collision, otherwise perform step S305.

It is to be noted that the second preset distance is typically preferably half the width of the vehicle, or the length of the rear overhang of the vehicle, or the distance between the rear axle and the front overhang of the vehicle.

When $x_m$ is less than half the width of the vehicle, or $y_m$ is less than the length of the rear overhang of the vehicle, or $y_m$ is less than the distance between the rear axle and the front overhang of the vehicle, it is determined that the current vehicle is in collision.

Further, when it is determined that the current vehicle is in collision, S304 further includes: issuing a collision warning message.

Wherein a system may issue the collision warning message in real time through an on-board display or sound prompts, and may also send the warning message to a cell phone of a driver or an Internet of Vehicles platform at the same time, to remind the driver to take emergency measures, thereby reducing the occurrence of collision accidents.

S305: Determining that the current vehicle has no risk of collision.

Second Embodiment:

Referring to figure 3, the present application further provides a deformed example of collision detection via the second collision detection model for an encroachable obstacle. Step S300 further includes:

S311: Acquiring, in the second collision detection model, initial obstacle coordinates of the obstacles under the first rectangular coordinate system.

S312: Calculating a distance between each obstacle and the first origin based on the initial obstacle coordinates and coordinates of the first origin.

If the distance between at least one of the obstacles and the first origin is smaller than a third preset distance, performing step S313, otherwise performing step S315.

It is to be noted that the third preset distance is a distance between the geometric center of the current vehicle and either side of the front or rear axle of the vehicle.

S313: Acquiring transformed obstacle coordinates of obstacles in a second preset circular region under the second rectangular coordinate system.

The second preset circle region takes the first origin as a center of the circle and the third preset distance as a radius.

Further, step S313 specifically includes:
Acquiring a vehicle heading angle, corresponding initial obstacle coordinates of the obstacles in the second preset circular region under the first rectangular coordinate system, and coordinates of the midpoint of the rear axle of the vehicle under the first rectangular coordinate system.

Calculating a first included angle based on the initial obstacle coordinates and the coordinates of the midpoint of the rear axle of the vehicle, and calculating a distance between each obstacle and the midpoint of the rear axle of the vehicle.

The first included angle is an included angle between a connecting line of each obstacle and the midpoint of the rear axle of the vehicle and a perpendicular line segment from the obstacle to the X-axis of the second rectangular coordinate system.

Calculating a second included angle based on the first included angle and the vehicle heading angle.

Calculating the transformed obstacle coordinates of each obstacle based on the distance between the obstacle and the midpoint of the rear axle of the vehicle and the second included angle.

S314: Calculating a distance between each obstacle in the second preset circular region and the second origin based on the transformed obstacle coordinates and coordinates of the second origin.

If the distance between at least one of the obstacles in the second preset circular region and the second origin is smaller than a second preset distance, determining that the current vehicle is in collision, otherwise perform step S315.

Further, when it is determined that the current vehicle is in collision, S314 further includes: issuing a collision warning message.

S315: Determining that the current vehicle has no risk of collision.

Third Embodiment:

Referring to figure 4, the present application further provides a vehicle collision detection system. The system includes:

A first acquisition module configured to acquire a collection of obstacle information within a preset range of a current vehicle.

In a feasible implementation, the collection of obstacle information may be obtained by target sensors, and the target sensors may be sensors corresponding to LIDAR and a stereo camera. The LIDAR may be provided on both sides of the bottom end of the vehicle to be symmetrical left and right or front and back, in order to obtain information of obstacles that are far away and in a low position, and require high detection accuracy. The stereo camera is provided on the top of the vehicle to obtain information about obstacles that are close and in a high position. Through the combination of the LIDAR and the stereo camera, the acquired collection of obstacle information is more comprehensive and accurate, so as to help detect more accurately during subsequent collision detection, and to prevent the occurrence of collision accidents caused by missing obstacle detection.

A dividing module: configured to divide the collection of obstacle information into a first obstacle map and a second obstacle map based on a preset obstacle height.

The dividing module includes:

A calibration unit: configured to calibrate maximum lengths of front wheels and rear wheels of the current vehicle.

A setting unit: configured to set the preset obstacle height according to calibration results of the calibration unit.

It is to be noted that because chassis heights and vehicle heights vary from vehicle to vehicle, the preset obstacle height is calibrated according to an actual vehicle, which is not limited herein.

A dividing unit: configured to determine whether heights of obstacles corresponding to the collection of obstacle information are greater than the preset obstacle height; if yes, classify the obstacles into the first obstacle map; otherwise, classify the obstacles into the second obstacle map.

A second acquisition module: configured to model the current vehicle configured based on the first obstacle map and the second obstacle map, and fuse vehicle models with the corresponding obstacle maps to obtain a first collision detection model and a second collision detection model, respectively.

The second acquisition module includes:

A modeling unit: configured to obtain a first vehicle model and a second vehicle model.

A fusion unit: configured to fuse the first vehicle model and the second vehicle model with the first obstacle map and the second obstacle map, respectively, to obtain the first collision detection model and the second collision detection model.

A determining module: configured to obtain a distance relationship between a preset position of the current vehicle and the obstacles corresponding to the collection of obstacle information through the first collision detection model and/or the second collision detection model, and determine whether the current vehicle is in collision based on the distance relationship.

The system further includes:

A building module: configured to build a first rectangular coordinate system and a second rectangular coordinate system. The first rectangular coordinate system takes a geometric center of the current vehicle as a first origin, a width direction of the current as an x-axis, and a length direction of the vehicle as a y-axis; and the second rectangular coordinate system takes a midpoint of a rear axle of the current vehicle as a second origin, the width direction of the vehicle as an X-axis, and the length direction of the vehicle as a Y-axis.

The determining module includes:

An acquisition unit: configured to acquire, in the first collision detection model or the second collision detection model, initial obstacle coordinates of the obstacles under the first rectangular coordinate system.

A first calculation unit: configured to calculate a distance between each obstacle and the first origin based on the initial obstacle coordinates and coordinates of the first origin, so as to obtain transformed obstacle coordinates of obstacles in a second preset circular region under the second rectangular coordinate system when the distance is smaller than a first preset distance or a third preset distance.

A second calculation unit: configured to calculate a distance between each obstacle in the second preset circular region to the second origin based on the transformed obstacle coordinates and coordinates of the second origin, so as to determine that the current vehicle is in collision when the distance is smaller than a second preset distance.

The system further includes:

A warning module: configured to issue a collision warning message when it is determined that the current vehicle is in collision.

Fourth Embodiment:

The present application further provides a vehicle. The vehicle is configured with a vehicle collision detection system, and the system detects whether a current vehicle is in collision using the vehicle collision detection method described above.

In summary, the present application provides the vehicle collision detection method and system and the vehicle. The obstacle maps are divided according to the height of an obstacle, then the corresponding collision detection models are built, and the distance relationship between the current vehicle and the obstacle is determined through the collision detection models to obtain the collision risk. The collision risk can be analyzed accurately in real time for different types of obstacle heights, the accuracy and efficiency of collision detection are improved, and the driving safety of the vehicle and the personal safety of occupants are further guaranteed.

Although exemplary embodiments have been described herein with reference to the accompanying drawings, it should be understood that the above exemplary embodiments are merely exemplary and are not intended to limit the scope of the present application. Various changes and modifications may be made therein by a person of ordinary skill in the art without departing from the scope and spirit of the present application. All such changes and modifications are intended to fall within the scope of the present application as required by the appended claims.

A person of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. A person skilled in the art may use different methods to implement the described functions for each particular application, but such implementations should not be considered outside the scope of the present application.

In the several embodiments provided in the present application, it should be understood that the disclosed devices and methods may be implemented in other ways. For example, the device embodiment described above is merely illustrative, for example, the units may be divided merely based on logical functions, while in practical implementations, there may be other division methods. For example, a plurality of units or components may be combined or integrated into another device, or some features may be omitted or not performed.

Various component embodiments of the present application may be implemented in hardware, or in software modules running on one or more processors, or a combination thereof. Those skilled in the art should understand that microprocessors or digital signal processors (DSPs) may be used in practice to implement some or all of the functionality of some of the modules according to embodiments of the present application. The present application may also be implemented as an apparatus program (e.g., computer programs and computer program products) for performing some or all of the methods described herein. Such a program implementing the present application may be stored on a computerreadable medium or may have the form of one or more signals. Such signals may be available for download from an Internet site, or provided on a carrier signal, or in any other form.

It is to be noted that relational terms such as first and second herein are only used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, article or device including a series of elements not only includes those elements, but also includes other elements not clearly listed, or also includes elements inherent to this process, method, article or device. An element proceeded by the phrase "comprises a" does not, without more constraints, preclude the existence of additional identical elements in the process, method, article, or device that includes the element.

Although the present application is described in connection with the above specific embodiments, it is evident that many substitutions, modifications and variations can be made by those familiar with the art in light of the foregoing. Accordingly, all such substitutions, modifications and variations fall within the spirit and scope of the appended claims.

**Claims**

1. A vehicle collision detection method, **characterized by** comprising the following steps:

   S100: acquiring a collection of obstacle information within a preset range of a current vehicle, and dividing the collection of obstacle information into a first obstacle map and a second obstacle map based on a preset obstacle height;
   S200: modeling the current vehicle based on the first obstacle map and the second obstacle map, and fusing vehicle models with the corresponding obstacle maps to obtain a first collision detection model and a second collision detection model, respectively; and
   S300: obtaining a distance relationship between a preset position of the current vehicle and obstacles corresponding to the collection of obstacle information through the first collision detection model and/or the second collision detection model, and determining whether the current vehicle is in collision based on the distance relationship.

2. The vehicle collision detection method according to claim 1, **characterized in that** the dividing the collection of obstacle information into a first obstacle map and a second obstacle map based on a preset obstacle height in step S100 comprises:

   calibrating maximum lengths of front wheels and rear wheels of the current vehicle, respectively, and setting the preset obstacle height according to calibration results; and
   determining whether heights of the obstacles corresponding to the collection of obstacle information are greater than the preset obstacle height, if yes, classifying the obstacles into the first obstacle map, otherwise classifying the obstacles into the second obstacle map.

3. The vehicle collision detection method according to claim 2, **characterized in that** step S200 comprises:

   modeling the current vehicle to obtain a first vehicle model comprising a front overhang and a rear overhang of the vehicle, and a second vehicle model with the front overhang and the rear overhang of the vehicle removed; and
   fusing the first vehicle model and the second vehicle model with the first obstacle map and the second obstacle map, respectively, to obtain the first collision detection model and the second collision detection model.

4. The vehicle collision detection method according to claim 3, **characterized in that** before performing step S300, the method comprises:
building a first rectangular coordinate system with a geometric center of the current vehicle as a first origin, a width direction of the current as an x-axis, and a length direction of the vehicle as a y-axis.

5. The vehicle collision detection method according to claim 4, **characterized in that** before performing step S300, the method further comprises:
building a second rectangular coordinate system with a midpoint of a rear axle of the current vehicle as a second origin, the width direction of the vehicle as an X-axis, and the length direction of the vehicle as a Y-axis.

6. The vehicle collision detection method according to claim 5, **characterized in that** step S300 comprises:

S301: acquiring, in the first collision detection model, initial obstacle coordinates of the obstacles under the first rectangular coordinate system;
S302: calculating a distance between each obstacle and the first origin based on the initial obstacle coordinates and coordinates of the first origin,
if the distance between at least one of the obstacles and the first origin is smaller than a first preset distance, performing step S303, otherwise performing step S305;
S303: acquiring transformed obstacle coordinates of obstacles in a first preset circular region under the second rectangular coordinate system, and proceeding to step S304;
S304: calculating a distance between each obstacle in the first preset circular region and the second origin based on the transformed obstacle coordinates and coordinates of the second origin,
if the distance between at least one of the obstacles in the first preset circular region and the second origin is smaller than a second preset distance, determining that the current vehicle is in collision, otherwise performing step S305; and
S305: determining that the current vehicle has no risk of collision, wherein
the first preset circle region takes the first origin as a center of the circle and the first preset distance as a radius.

7. The vehicle collision detection method according to claim 5, **characterized in that** step S300 comprises:

S311: acquiring, in the second collision detection model, initial obstacle coordinates of the obstacles under the first rectangular coordinate system;

S312: calculating a distance between each obstacle and the first origin based on the initial obstacle coordinates and coordinates of the first origin,
if the distance between at least one of the obstacles and the first origin is smaller than a third preset distance, performing step S313, otherwise performing step S315;
S313: acquiring transformed obstacle coordinates of obstacles in a second preset circular region under the second rectangular coordinate system, and proceeding to step S314;
S314: calculating a distance between each obstacle in the second preset circular region and the second origin based on the transformed obstacle coordinates and coordinates of the second origin,
if the distance between at least one of the obstacles in the second preset circular region and the second origin is smaller than a second preset distance, determining that the current vehicle is in collision, otherwise performing step S315; and
S315: determining that the current vehicle has no risk of collision, wherein
the second preset circle region takes the first origin as a center of the circle and the third preset distance as a radius.

8. The vehicle collision detection method according to claim 6 or 7, **characterized in that** step S303 or step S313 specifically comprises:

acquiring a vehicle heading angle, corresponding initial obstacle coordinates of the obstacles in the first preset circular region or the second preset circular region under the first rectangular coordinate system, and coordinates of the midpoint of the rear axle of the vehicle under the first rectangular coordinate system;
calculating a first included angle based on the initial obstacle coordinates and the coordinates of the midpoint of the rear axle of the vehicle, and calculating a distance between each obstacle and the midpoint of the rear axle of the vehicle, wherein the first included angle is an included angle between a connecting line of each obstacle and the midpoint of the rear axle of the vehicle and a perpendicular line segment from the obstacle to the X-axis of the second rectangular coordinate system;
calculating a second included angle based on the first included angle and the vehicle heading angle; and
calculating the transformed obstacle coordinates of each obstacle based on the distance between the obstacle and the midpoint of the rear axle of the vehicle and the second included angle.

9. The vehicle collision detection method according to claim 8, **characterized in that** when it is determined that the current vehicle is in collision, step S304 or S314 further comprises: issuing a collision warning message.

10. A vehicle collision detection system, **characterized by** comprising:

a first acquisition module configured to acquire a collection of obstacle information within a preset range of a current vehicle;
a dividing module configured to divide the collection of obstacle information into a first obstacle map and a second obstacle map based on a preset obstacle height;
a second acquisition module configured to model the current vehicle configured based on the first obstacle map and the second obstacle map, and fuse vehicle models with the corresponding obstacle maps to obtain a first collision detection model and a second collision detection model, respectively; and
a determining module configured to obtain a distance relationship between a preset position of the current vehicle and obstacles corresponding to the collection of obstacle information through the first collision detection model and/or the second collision detection model, and determine whether the current vehicle is in collision based on the distance relationship.

11. The system according to claim 10, **characterized by** further comprising:

a building module configured to build a first rectangular coordinate system and a second rectangular coordinate system, wherein the first rectangular coordinate system takes a geometric center of the current vehicle as a first origin, a width direction of the current as an x-axis, and a length direction of the vehicle as a y-axis; and the second rectangular coordinate system takes a midpoint of a rear axle of the current vehicle as a second origin, the width direction of the vehicle as an X-axis, and the length direction of the vehicle as a Y-axis; and
a warning module configured to issue a collision warning message when it is determined that the current vehicle is in collision.

12. The system according to claim 11, **characterized in that** the dividing module comprises:

a calibration unit configured to calibrate maximum lengths of front wheels and rear wheels of the current vehicle;
a setting unit configured to set the preset obstacle height according to calibration results of the calibration unit; and
a dividing unit configured to determine whether heights of the obstacles corresponding to the collection of obstacle information are greater than the preset obstacle height; if yes, classify the obstacles into the first obstacle map; otherwise, classify the obstacles into the second obstacle map.

13. The system according to claim 12, **characterized in that** the second acquisition module comprises:

a modeling unit configured to obtain a first vehicle model and a second vehicle model; and
a fusion unit configured to fuse the first vehicle model and the second vehicle model with the first obstacle map and the second obstacle map, respectively, to obtain the first collision detection model and the second collision detection model.

14. The system according to claim 13, **characterized in that** the determining module comprises:

an acquisition unit configured to acquire, in the first collision detection model or the second collision detection model, initial obstacle coordinates of the obstacles under the first rectangular coordinate system;
a first calculation unit configured to calculate a distance between each obstacle and the first origin based on the initial obstacle coordinates and coordinates of the first origin to obtain transformed obstacle coordinates of obstacles in a second preset circular region under the second rectangular coordinate system when the distance is smaller than a first preset distance or a third preset distance; and
a second calculation unit configured to calculate a distance between each obstacle in the second preset circular region to the second origin based on the transformed obstacle coordinates and coordinates of the second origin, so as to determine that the current vehicle is in collision when the distance is smaller than a second preset distance.

15. A vehicle, **characterized in that** the vehicle is configured with a vehicle collision detection system, and the system detects whether a current vehicle is in collision using the vehicle collision detection method according to any one of claims 1 to 9.

Acquire a collection of obstacle information within a preset range of a current vehicle

↓

Divide the collection of obstacle information into a first obstacle map and a second obstacle map based on a preset obstacle height

↓

Model the current vehicle based on the first obstacle map and the second obstacle map

↓

Fuse vehicle models with the corresponding obstacle maps to obtain a first collision detection model and a second collision detection model, respectively

↓

Obtain a distance relationship between a preset position of the current vehicle and obstacles corresponding to the collection of obstacle information through the first collision detection model and/or the second collision detection model

↓

Determine whether the current vehicle is in collision based on the distance relationship

**Fig. 1**

**Fig.2**

**Fig. 3**

**Fig. 4**

# EP 4 530 144 A1

| | INTERNATIONAL SEARCH REPORT | International application No. |
|---|---|---|
| | | **PCT/CN2023/141752** |

**A. CLASSIFICATION OF SUBJECT MATTER**

B60W60/00(2020.01)i; B60W30/095(2012.01)i; B60W40/04(2006.01)i

According to International Patent Classification (IPC) or to both national classification and IPC

**B. FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, WPABSC, VEN, DWPI, ENTXTC, CJFD: 碰撞, 障碍物, 高度, 划分, 分类, 地图, 模型, 融合, 距离, collision, obstacle?, height, classif+, map, model+, fuse, distance

**C. DOCUMENTS CONSIDERED TO BE RELEVANT**

| Category* | Citation of document, with indication, where appropriate, of the relevant passages | Relevant to claim No. |
|---|---|---|
| PX | CN 116654011 A (HUIZHOU DESAY SV AUTOMOTIVE CO., LTD.) 29 August 2023 (2023-08-29) <br> description, pages 1-8, and figures 1-4 | 1-15 |
| X | CN 110304056 A (GUANGZHOU XPENG AUTOMOBILE TECHNOLOGY CO., LTD.) 08 October 2019 (2019-10-08) <br> description, pages 5-9, and figures 1-9 | 1-5, 10-13, 15 |
| A | CN 111591288 A (BEIJING IDRIVERPLUS TECHNOLOGY CO., LTD.) 28 August 2020 (2020-08-28) <br> entire document | 1-15 |
| A | CN 113401054 A (SAIC-GM-WULING AUTOMOBILE CO., LTD.) 17 September 2021 (2021-09-17) <br> entire document | 1-15 |
| A | CN 112731451 A (DONGFENG COMMERCIAL VEHICLE CO., LTD.) 30 April 2021 (2021-04-30) <br> entire document | 1-15 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 April 2024** | **13 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/141752** |

**C. DOCUMENTS CONSIDERED TO BE RELEVANT**

| Category* | Citation of document, with indication, where appropriate, of the relevant passages | Relevant to claim No. |
|---|---|---|
| A | CN 111626164 A (ANHUI JIANGHUAI AUTOMOBILE GROUP CORP., LTD.) 04 September 2020 (2020-09-04)<br>entire document | 1-15 |
| A | US 2014176714 A1 (AUTOMOTIVE RESEARCH & TESTING CENTER) 26 June 2014 (2014-06-26)<br>entire document | 1-15 |
| A | KR 20130057571 A (HYUNDAI MOTOR CO., LTD.) 03 June 2013 (2013-06-03)<br>entire document | 1-15 |

Form PCT/ISA/210 (second sheet) (July 2022)

**INTERNATIONAL SEARCH REPORT**
Information on patent family members

International application No.

**PCT/CN2023/141752**

| Patent document cited in search report | | | Publication date (day/month/year) | Patent family member(s) | Publication date (day/month/year) |
|---|---|---|---|---|---|
| CN | 116654011 | A | 29 August 2023 | None | |
| CN | 110304056 | A | 08 October 2019 | None | |
| CN | 111591288 | A | 28 August 2020 | None | |
| CN | 113401054 | A | 17 September 2021 | None | |
| CN | 112731451 | A | 30 April 2021 | None | |
| CN | 111626164 | A | 04 September 2020 | None | |
| US | 2014176714 | A1 | 26 June 2014 | None | |
| KR | 20130057571 | A | 03 June 2013 | None | |

Form PCT/ISA/210 (patent family annex) (July 2022)